# EUROPÄISCHE PATENTANMELDUNG

(11) **EP 0 857 984 A2**
(43) Veröffentlichungstag der Anmeldung: **12.08.1998**
(21) Anmeldenummer: 98100653.9
(22) Anmeldetag: 15.01.1998
(51) Int. Cl.: G01V 3/12

(54) **Vorrichtung zum Erkennen der Existenz von Fahrzeugteilen**

(30) Priorität: 05.02.1997 DE 19704328
(71) Anmelder: Bayerische Motoren Werke Aktiengesellschaft, 80788 München (DE)
(72) Erfinder: Wild, Wilhelm, 94315 Straubing (DE)

(57) **Zusammenfassung**

Bei einer Vorrichtung zum Erkennen der Existenz von Fahrzeugteilen, die im eingebauten Zustand unzugänglich und mit optischen Mitteln nicht detektierbar sind, tragen die Teile einen Empfänger, der eine eingestrahlte Energie aufnimmt.

## Beschreibung

Die Erfindung bezieht sich auf eine Vorrichtung mit den Merkmalen des Oberbegriffs von Patentanspruch 1.

Bei Fahrzeugen tritt das Problem auf, diese Fahrzeugteile während der Montage, d. h. nach ihrem Einbau und/oder auch im Feld, beispielsweise wenn das Fahrzeug sich in einer Servicewerkstätte befindet, nachweisen zu müssen. Ein Ausbau des Fahrzeugteils scheidet aufgrund des hohen Aufwands ebenso aus wie eine Durchleuchtung oder eine Untersuchung mit Ultraschall. Letztere Methoden erfordern einen hohen Aufwand und Fachpersonal, das in der Handhabung entsprechender Untersuchungsmittel geübt ist. Zudem stehen derartige Untersuchungseinrichtungen in der Regel nicht ohne weiteres zur Verfügung.

Der Erfindung liegt die Aufgabe zugrunde, eine Vorrichtung der eingangs genannten Art zu schaffen, die eine sichere und mit geringem Aufwand verbundene Erkennung der Fahrzeugteile ermöglicht.

Die Erfindung löst diese Aufgabe durch die Merkmale des Patentanspruchs 1.

Da die Empfänger die eingestrahlte Energie aufnehmen, zeigt der Sender eine Rückwirkung in Form einer Verstimmung. Damit kann aus der Verstimmung des Senders auf die Existenz des Fahrzeugteils geschlossen werden. Die Handhabung derartiger Sender ist mit geringem Aufwand verbunden. Dies gilt auch hinsichtlich der Kosten eines derartigen Senders, die angesichts der beim Fahrzeugbau auftretenden hohen Stückzahlen bezogen auf das einzelne Fahrzeug nur unwesentlich in Erscheinung treten.

Die Erfindung ermöglicht eine Vielzahl von vorteilhaften Ausgestaltungen. So kann die Sender-/Empfängerkombination auf magnetoakustischer oder HF-Basis arbeiten. Bei den Empfängern kann es sich um solche handeln, wie sie in Warenhäusern verwendet und den dort angebotenen Artikeln wie Kleidungsstücken und dergleichen körperlich zugeordnet sind. Sie zeichnen sich durch einen niedrigen Preis aus.

Auch kann das Energieaufnahmeverhalten auf die individuelle Beschaffenheit des Teils abgestimmt sein. Damit wird es möglich, Teile voneinander zu unterscheiden, die beispielsweise im Rahmen einer Ultraschalluntersuchung sich nicht voneinander unterscheiden, da sie dieselbe körperliche Gestalt besitzen. Ein Anwendungsfall ist beispielsweise ein Gasgenerator für einen Airbag, der je nach Einsatzgebiet des jeweiligen Fahrzeugs eine unterschiedliche Treibgasmenge produziert, der sich jedoch in seinen äußeren Abmessungen für Fahrzeuge mit unterschiedlichem Einsatzgebiet nicht unterscheidet.

Mit Hilfe der Erfindung ist es auch möglich, mit ein und derselben Untersuchung auch die Existenz mehrerer derartiger Teile zu erkennen. Sind beispielsweise zwei Teile in entsprechender Weise mit einem deartigen Empfänger ausgerüstet, so unterscheidet sich das Energieaufnahmeverhalten dann insgesamt von der Situation, bei der nur eines oder keines der Teile tatsächlich verbaut ist. Eine Unterscheidung, welches der beiden Teile gegebenenfalls nicht verbaut ist, läßt sich dann erzielen, wenn das Energieaufnahmeverhalten der beiden Teile voneinander unterschiedlich ist. Damit ergeben sich vier deutlich voneinander unterscheidbare Fälle, nämlich das Energieaufnahmeverhalten durch beide Teile, jeweils nur durch eines der beiden oder durch keines der dann nicht vorhandenen Teile.

Eine weitere Verbesserung der Erfindung besteht darin, den Empfänger als Teil eines Transponders auszubilden, der einen Teil der aufgenommenen Energie zurückstrahlt. Dadurch kann das jeweilige Fahrzeugteil in seiner Existenz und entsprechend der Beschaffenheit des zurückgestrahlten Signals auch in seinen individuellen Eigenschaften noch genauer erkannt werden.

Neben dem bereits genannten Anwendungsfall eines Gasgenerators für eine Fahrzeug- Sicherheitseinrichtung ist ein weiterer Anwendungsfall ein Knieschutzelement, das für bestimmte Fahrzeugausführungen vorgeschrieben ist und bei der Fahrzeugfertigung bedarfsweise in den jeweiligen Fahrzeugen verdeckt verbaut wird.

## Patentansprüche

1. Vorrichtung zum Erkennen der Existenz von Fahrzeugteilen, die im eingebauten Zustand unzugänglich und mit optischen Mitteln nicht detektierbar sind, **dadurch gekennzeichnet**, daß die Teile einen Empfänger tragen, der eine eingestrahlte Energie aufnimmt.

2. Vorrichtung nach Anspruch 1, **dadurch gekennzeichnet**, daß der Empfänger in seinem Energieaufnahmeverhalten auf die individuelle Beschaffenheit des Teils abgestimmt ist.

3. Vorrichtung nach einem der vorhergehenden Ansprüche, **dadurch gekennzeichnet**, daß zum Erkennen mehrerer Fahrzeugteile jedem dieser Teile ein in seinem Energieaufnahmeverhalten individueller Empfänger körperlich zugeordnet ist.

4. Vorrichtung nach einem der vorhergehenden Ansprüche, **dadurch gekennzeichnet**, daß der Empfänger Bestandteil einer Sende-Empfangseinrichtung (Transponder) ist, die zumindest einen Bruchteil der aufgenommen Energie zurückstrahlt.
